# EUROPEAN PATENT APPLICATION

(11) **EP 4 716 344 A1**
(43) Date of publication of application: **25.03.2026**
(21) Application number: 23936951.5
(22) Date of filing: 15.05.2023
(51) Int. Cl.: H04W 72/1268, H04W 72/21

(54) **COMMUNICATION METHOD, COMMUNICATION APPARATUS, COMMUNICATION DEVICE, COMMUNICATION SYSTEM, AND STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: Dehns Germany Partnerschaft mbB
(86) International application number: PCT/CN2023/094360
(87) International publication number: WO 2024/234264

(57) **Abstract**

The present disclosure relates to the technical field of communication, and specifically relates to a communication method, a communication apparatus, a communication device, a communication system, and a storage medium, wherein the communication method comprises: determining that a position information validity period has expired, and based on a scheduling instruction, executing uplink transmission (S201). The present disclosure allows a terminal, after determining that a position information validity period has expired, to continue in a connected state without entering an idle state or inactive state, thereby allowing for continuing to perform uplink transmission on the basis of a network device scheduling instruction, and helping to avoid uplink transmission delay.

## Description

### TECHNICAL FIELD

The present disclosure relates to the field of the communication technology, and more specifically, to a communication method, a communication apparatus, a communication device, a communication system, and a storage medium.

### BACKGROUND

When a terminal performs an uplink transmission, it needs to perform pre-compensation for the uplink synchronization, such as performing pre-compensation based on timing advance (TA). However, some technical problems may exist in certain scenarios.

### SUMMARY

Embodiments of the present disclosure provide a communication method, a communication apparatus, a communication device, a communication system, and a storage medium to address technical problems in the related art.

According to a first aspect of the present disclosure, there is provided a communication method, where the method is performed by a terminal, and the method includes: determining that a validity time period of location information expires, and performing an uplink transmission based on a scheduling command.

According to a second aspect of the present disclosure, there is provided a communication method, where the method is performed by a network device, and the method includes: determining that a validity time period of location information of a terminal expires, and receiving an uplink transmission from the terminal based on a scheduling command sent to the terminal.

According to a third aspect of the present disclosure, there is provided a communication apparatus, where the apparatus includes: a sending module, configured to determine that a validity time period of location information expires, and perform an uplink transmission based on a scheduling command.

According to a fourth aspect of the present disclosure, there is provided a communication device, where the device includes: a receiving module, configured to determine that a validity time period of location information of a terminal expires, and receive an uplink transmission from the terminal based on a scheduling command sent to the terminal.

According to a fifth aspect of the present disclosure, there is provided a communication device, including one or more processors, where the processors are configured to invoke commands to cause the communication device to perform the above-described communication method.

According to a sixth aspect of the present disclosure, there is provided a communication system, including a terminal, a network device, and a core network device, where the terminal is configured to implement the communication method performed by the terminal, and the network device is configured to implement the communication method performed by the network device.

According to a seventh aspect of the present disclosure, there is provided a storage medium, and the storage medium storing commands, where, when the commands are executed on a communication device, the communication device is caused to perform the communication method performed by the terminal as described above, and the network device is configured to implement the communication method performed by the network device as described above.

According to the embodiments of the present disclosure, after the terminal determines that the validity time period of the location information expires, the terminal may not enter the idle state or the inactive state, but may remain in the connected state, so that the terminal may continue to perform an uplink transmission based on the scheduling command of the network device, which helps to avoid delay in the uplink transmission.

### BRIEF DESCRIPTION OF THE DRAWINGS

To more clearly illustrate the technical solutions in the embodiments of the present disclosure, the accompanying drawings used in the description of the embodiments will be briefly introduced below. Obviously, the accompanying drawings described below are only some embodiments of the present disclosure. For those skilled in the art, other drawings may be obtained based on these drawings without creative effort.
FIG. 1A is a schematic diagram of the architecture of a communication system shown according to an embodiment of the present disclosure.
FIG. 1B is an interactive schematic diagram of a beam information transmission method shown according to an embodiment of the present disclosure.
FIG. 2 is a schematic flowchart of a communication method shown according to an embodiment of the present disclosure.
FIG. 3 is a schematic flowchart of another communication method shown according to an embodiment of the present disclosure.
FIG. 4 is a schematic flowchart of another communication method shown according to an embodiment of the present disclosure.
FIG. 5 is a schematic flowchart of another communication method shown according to an embodiment of the present disclosure.
FIG. 6 is a schematic flowchart of a communication method shown according to an embodiment of the present disclosure.
FIG. 7 is a schematic block diagram of a communication apparatus shown according to an embodiment of the present disclosure.
FIG. 8 is a schematic block diagram of a communication apparatus shown according to an embodiment of the present disclosure.
FIG. 9 is a schematic diagram of the structure of a communication device according to an embodiment of the present disclosure.
FIG. 10 is a schematic diagram of the structure of a chip according to an embodiment of the present disclosure.

### DETAILED DESCRIPTION

Embodiments of the present disclosure are not exhaustive, but merely illustrative of some embodiments, which are not intended to limit the protection scope of the present disclosure. In a case with no contradiction, each step in a certain embodiment may be implemented as an independent embodiment, and the steps may be arbitrarily combined. For example, a solution after removing some steps in a certain embodiment may also be implemented as an independent embodiment, and the order of the steps in a certain embodiment may be arbitrarily interchanged. Furthermore, the optional implementations in a certain embodiment may be arbitrarily combined. Moreover, the embodiments may be arbitrarily combined with each other. For example, some or all steps of different embodiments may be arbitrarily combined, and a certain embodiment may be arbitrarily combined with the optional implementations of other embodiments.

In each of the embodiments of the present disclosure, unless otherwise specified or in case of logical conflicts, the terms and/or descriptions of the embodiments are consistent with each other, and may be referenced by each other. Technical features in different embodiments may be combined to form new embodiments based on their inherent logical relationships.

The terms used in the embodiments of the present disclosure are for the purpose of describing particular embodiments only, and are not intended to limit the scope of the present disclosure.

In the embodiments of the present disclosure, unless otherwise stated, elements expressed in the singular form, such as "a", "an", "the aforementioned", "said", "the above-mentioned", "this", etc., may mean "one and only one", or may alternatively mean "one or more", "at least one", etc.

For example, in a case that the articles such as "a", "an", and "the" are used in translation, the noun following the article may be understood as either a singular or a plural form.

In the embodiments of the present disclosure, "a plurality of" refers to two or more.

In some embodiments, terms such as "at least one of", "one or more", "a plurality of ", and "multiple" may be interchanged with each other.

In some embodiments, the records of "at least one of A or B", "A and/or B", "in one case performing A, and in another case performing B", "in response to one case, performing A, and in response to another case, performing B", etc., may include the following technical solutions depending on the situation: in some embodiments, A is performed (A is performed regardless of B); in some embodiments, B is performed (B is performed regardless of A); in some embodiments, it is selected from A and B for performing (A or B is selectively performed); and in some embodiments, both A and B are performed. The same applies when there are more branches such as A, B, C, etc.

In some embodiments, the records of "A or B" may include the following technical solutions depending on the situation: in some embodiments, A is performed (A is performed regardless of B); in some embodiments, B is performed (B is performed regardless of A); and in some embodiments, it is selected from A and B for performing (A or B is selectively performed). The same applies when there are more branches such as A, B, C, etc.

The prefixes "first", "second", etc., used in the embodiments of the present disclosure are merely for distinguishing different described objects and do not constitute restrictions on the position, order, priority, quantity, or content of the described objects. For the description of the described objects, reference may be made to the description in the claims or the context of the embodiments, and the use of prefixes should not constitute unnecessary restrictions. For example, if the described object is a "field", the ordinal numbers before "field" in "first field" and "second field" do not restrict the position or order of the "fields". "First" and "second" do not restrict whether the "field" they describe are in the same message, nor do they restrict the order of "first field" and "second field". Similarly, if the described object is a "level", the ordinal numbers before "level" in "first level" and "second level" do not restrict the priority between "levels". Furthermore, the number of described objects is not limited by ordinal numbers, and may be one or more. Taking "first apparatus" as an example, the number of "apparatus" may be one or more. Furthermore, the objects described by different prefixes may be the same or different. For example, if the object is described as an "apparatus", "first apparatus" and "second apparatus" may be the same apparatus or different apparatuses, and their types may be the same or different. Similarly, if the object is described as "information", "first information" and "second information" may be the same information or different information, and their contents may be the same or different.

In some embodiments, "including A", "containing A", "for indicating A", and "carrying A" may be interpreted as directly carrying A or indirectly indicating A.

In some embodiments, the terms "in response to...", "in response to determining...", "in the case of...", "at the time...", "when...", "if...", "assuming that...", etc., may be used interchangeably.

In some embodiments, the terms "greater than", "greater than or equal to", "not less than", "more than", "more than or equal to", "not less than", "higher than", "higher than or equal to", "not lower than", and "above" may be used interchangeably. The terms "less than", "less than or equal to", "not greater than", "less than", "less than or equal to", "not more than", "lower than", "lower than or equal to", "not higher than", and "below" may be used interchangeably.

In some embodiments, an apparatus or the like may be interpreted as a physical apparatus or a virtual apparatus, and their names are not limited to those used in the embodiments.

The terms "apparatus", "equipment", "device", "circuit", "network element", "node", "function", "unit", "section", "system", "network", "chip", "chip system", "entity", and "subject" may be used interchangeably.

In some embodiments, "network" may be interpreted as an apparatus included in a network (e.g., an access network device, a core network device, etc.).

In some embodiments, the terms of "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", and "bandwidth part (BWP)" may be used interchangeably.

In some embodiments, the terms of "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "subscriber station", "access terminal", "mobile terminal", "wireless terminal", "remote terminal", "handset", "user agent", "mobile client", and "client" may be used interchangeably.

In some embodiments, access network devices, core network devices, or network devices may be replaced with terminals. For example, structures in which communication between access network devices, core network devices, or network devices and terminals is replaced with communication between a plurality of terminals (e.g., device-to-device (D2D), vehicle-to-everything (V2X), etc.) may also be applied to embodiments of the present disclosure. In this case, it may also be configured as a structure in which the terminal has all or part of the functions of the access network device. Furthermore, the terms such as "uplink" and "downlink" may be replaced with terms corresponding to communication between terminals (e.g., "sidelink"). For example, uplink channel, downlink channel, etc., may be replaced with sidelink channel. Uplink link, downlink link, etc., may be replaced with sidelink link.

In some embodiments, the terminal may be replaced with an access network device, a core network device, or a network device. In this case, it may also be configured as a structure in which the access network device, the core network device, or the network device may has all or part of the functions of the terminal.

In some embodiments, the obtaining of data, information, etc., may comply with the laws and regulations of the country where it is located.

In some embodiments, data, information, etc., may be obtained after the user's consent is obtained.

Furthermore, each element, each row, or each column in the table of the present disclosure may be implemented as an independent embodiment, and the combination of any element, any row, or any column may also be implemented as an independent embodiment.

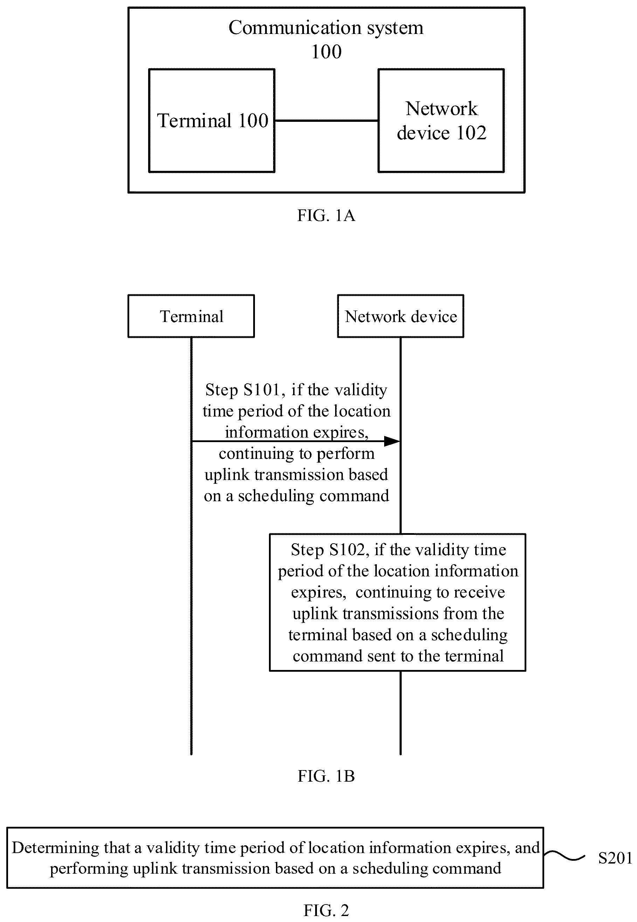

FIG. 1A is a schematic diagram of the architecture of a communication system shown according to an embodiment of the present disclosure.

As shown in FIG. 1A, the communication system 100 includes a terminal 101 and a network device 102.

In some embodiments, the network device includes at least one of an access network device or a core network device.

In some embodiments, a core network device may be a device including one or more network elements; or, the core network device may be a plurality of devices or a group of devices, each including all or part of the one or more network elements. The network element may be virtual or physical. The core network may include, for example, at least one of an evolved packet core (EPC), a 5G core network (5GCN), or a next generation core (NCG).

In some embodiments, the terminal 101 includes, for example, at least one of a mobile phone, a wearable device, an Internet of Things device, a car with communication function, a smart car, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, or a wireless terminal device in smart home, which is not limited to this.

In some embodiments, the access network device 102 is, for example, a node or device that connects a terminal to a wireless network. The access network device may include at least one of an evolved NodeB (eNB) in a 5G communication system, a next generation eNB (ng-eNB), a next-generation NodeB (gNB), a node B (NB), a home node B (HNB), a home evolved nodeB (HeNB), a radio backhaul equipment, a radio network controller (RNC), a base station controller (BSC), a base transceiver station (BTS), a base band unit (BBU), a mobile switching center, a base station in a 6G communication systems, an open RAN, a cloud RAN, a base station in other communication systems, or an access node in a Wi-Fi system, which is not limited to this.

In some embodiments, the technical solutions of the present disclosure may be applied to an Open RAN architecture. In this case, the interfaces between or within access network devices involved in the embodiments of the present disclosure may be internal interfaces of Open RAN. The processes and information interactions between these internal interfaces may be implemented by software or programs.

In some embodiments, the access network device may be composed of a central unit (CU) and a distributed unit (DU), where the CU may also be referred to as a control unit. By using the CU-DU structure, the protocol layer of the access network device may be split. Some functions of the protocol layer are centrally controlled by the CU, and the remaining partial or all functions of the protocol layer are distributed in the DU and centrally controlled by the CU, which is not limited to this.

It may be understood that the communication system described in the embodiments of the present disclosure is for the purpose of more clearly illustrating the technical solutions of the present disclosure, and does not constitute a limitation on the technical solutions provided in the present disclosure. Those skilled in the art may know, with the evolution of system architecture and the emergence of new business scenarios, the technical solutions provided in the present disclosure are also applicable to similar technical problems.

The following embodiments of the present disclosure may be applied to the communication system 100 or some entities shown in FIG. 1A, but are not limited to this. The entities shown in FIG. 1A are illustrative. The communication system may include all or some entities in FIG. 1A, or may include entities other than these in FIG. 1A. The number and form of each entity are arbitrary. Each entity may be physical or virtual. The connection relationship between the entities is illustrative. The entities may not be connected or may be connected. The connection may be in any way, which may be a direct connection or an indirect connection, or may be a wired connection or a wireless connection.

The embodiments of the present disclosure may be applied to Long Term Evolution (LTE), LTE-Advanced (LTE-A), LTE-Beyond (LTE-B), SUPER 3G, IMT-Advanced, 4th generation mobile communication systems (4G), 5th generation mobile communication systems (5G), 5G New Radio (NR), Future Radio Access (FRA), New-Radio Access Technology (RAT), New Radio (NR), New Radio Access (NX), Future Generation Radio Access (FX), Global System for Mobile Communications (GSM (a registered trademark)), CDMA2000, Ultra Mobile Broadband (UMB), IEEE 802.11 (Wi-Fi (a registered trademark)), IEEE 802.16 (WiMAX (a registered trademark)), IEEE 802.20, Ultra-Wideband (UWB), Bluetooth (a registered trademark), Public Land Mobile Network (PLMN), Device-to-Dvice (D2D) systems, Machine-to-Machine (M2M) systems, Internet of Things (IoT) systems, Vehicle-to-Everything (V2X) systems, systems utilizing other communication methods, and next-generation systems expanded based on them. Furthermore, a combination of more than one system (e.g., a combination of LTE or LTE-A with 5G) may be applied.

In some embodiments, the terminal may perform communication in a non-terrestrial network (NTN), such as communication with a terrestrial network device via an aerial device (e.g., a satellite, an aerial platform, etc.). When the terminal performs the uplink transmissions, the terminal needs to perform pre-compensation for the uplink synchronization based on the timing advance (TA).

The TA used by the terminal to perform pre-compensation in the NTN may be entirely determined by the terminal, or may be partially determined by the terminal and partially indicated by the network side. Regardless of the manner, the terminal needs to determine the (all or part) TA based on its own location information, where there is a validity period of the location information, and for example, the validity period may be referred to as a validity time period.

When the validity time period of location information expires, in other words, the location information of the terminal becomes invalid, the TA determined by the terminal based on the location information cannot fully achieve pre-compensation for an uplink synchronization. Therefore, the terminal may leave the connected state and enter the idle or inactive state. Once the terminal leaves the connected state, the terminal cannot perform the uplink transmission and needs to re-enter the connected state to perform the uplink transmission. However, it needs to take some time for the terminal to enter the connected state, resulting in some delay in the uplink transmission.

FIG. 1B is an interactive schematic diagram of a beam information transmission method shown according to an embodiment of the present disclosure. The beam transmission method may be applied to a communication system.

As shown in FIG. 1B, the beam information transmission method includes following steps.

In step S101, after determining that the validity time period of the location information expires, the terminal may continue to perform an uplink transmission, and/or remain in the connected state, and/or not enter the non-connected state.

In some embodiments, uplink transmission may be continued to be performed based on a scheduling command.

In some embodiments, a validity duration of the location information.

In some embodiments, the location information is obtained based on a global navigation satellite system.

In some embodiments, when the terminal performs the uplink transmission based on the scheduling command, first, the terminal may determine a first time period after the validity time period of the location information, and then, the terminal may perform the uplink transmission based on the scheduling command within the determined first time period.

In some embodiments, the first time period includes an extended time period of the validity time period of the location information.

In some embodiments, the first time period includes a given time period.

In some embodiments, the terminal may determine, based on the first information from the network device, whether to extend the validity time period of the location information.

In some embodiments, determining, by the terminal based on the first information from the network device, whether to extend the validity time period of the location information may specifically be: determining, based on indication information from the network device, whether to extend the validity time period of the location information, where the first information includes the indication information.

In some embodiments, determining, by the terminal based on the indication information from the network device, whether to extend the validity time period of the location information may be: determining to extend the validity time period of the location information when the value of the indication information is a first value; or, determining not to extend the validity time period of the location information or not to extend the extended validity time period of the location information when the value of the indication information is a second value.

In some embodiments, determining, by the terminal based on the first information from the network device, whether to extend the validity time period of the location information may specifically be: determining, based on configuration information from the network device, whether to extend the validity time period of the location information, where the first information includes the configuration information.

In some embodiments, determining, by the terminal based on the configuration information from the network device, whether to extend the validity time period of the location information may be: determining to extend the validity time period of the location information when the configuration information includes information about the extended time period; or determining not to extend the validity time period of the location information when the configuration information does not include information about the extended time period.

In some embodiments, the terminal may determine a start position of the first time period based on a given rule.

In some embodiments, the terminal may determine a duration of the first time period based on the given rule.

In some embodiments, the terminal may determine the start position of the first time period based on configuration information.

In some embodiments, the terminal may determine the duration of the first time period based on configuration information.

In some embodiments, determining, by the terminal, the start position of the first time period based on the given rule may specifically be: determining the start position of the first time period as end position of the validity time period of the location information.

In some embodiments, determining, by the terminal, the start position of the first time period based on the given rule may specifically be: determining the start position of the first time period as a position after a first duration after the end position of the validity time period of the location information.

In some embodiments, when the terminal determines the duration of the first time period based on the given rule, first, the terminal may determine a remaining duration of a timing advance timer, and then, the terminal may determine that the duration of the first time period is equal to the remaining duration.

In some embodiments, after the first time period, the terminal may be controlled to enter a non-connected state.

In some embodiments, before performing the uplink transmission, the terminal may first determine partial or all timing advances based on the location information of the terminal that is most recently determined; and then, the terminal may perform pre-compensation for the uplink synchronization based on the timing advances.

In some embodiments, before performing the uplink transmission, the terminal may first determine a timing advance based on a timing drift on a service link; and then, the terminal may perform pre-compensation for the uplink synchronization based on the timing advance.

In step S102, after determining that the validity time period of the location information of the terminal expires, the network device may receive the uplink transmission from the terminal, and/or determine that the terminal continues to remain in the connected state, and/or determine that the terminal does not enter the non-connected state.

In some embodiments, the network device may receive the uplink transmission from the terminal based on a scheduling command sent to the terminal.

In some embodiments, the validity time period of location information includes a validity duration of the location information.

In some embodiments, the location information is obtained by the terminal based on a global navigation satellite system.

In some embodiments, when the network device receives uplink transmission from the terminal based on the scheduling command sent to the terminal, first, the network device may determine a first time period after the validity time period of the location information, and then, the network device may receive the uplink transmission from the terminal based on the scheduling command within the first time period.

In some embodiments, the first time period includes an extended time period of the validity time period of the location information.

In some embodiments, the first time period includes a given time period.

In some embodiments, the network device may send first information to the terminal, where the first information is used to determine whether to extend the validity time period of the location information.

In some embodiments, the first information includes indication information.

In some embodiments, when the value of the indication information sent by the network device to the terminal is a first value, the indication information may be used to determine to extend the validity time period of the location information; and/or, when the value of the indication information sent by the network device to the terminal is a second value, the indication information may be used to determine not to extend the validity time period of the location information.

In some embodiments, the first information includes configuration information.

In some embodiments, when the configuration information sent by the network device to the terminal includes information about the extended time period, the configuration information is used to determine to extend the validity time period of the location information; and/or, when the configuration information sent by the network device to the terminal does not include information about the extended time period, the configuration information is used to determine not to extend the validity time period of the location information.

In some embodiments, the network device may determine the start position of the first time period based on a given rule.

In some embodiments, the network device may determine a duration of the first time period based on the given rule.

In some embodiments, the network device may configure the start position of the first time period for the terminal by using configuration information.

In some embodiments, the network device may configure the duration of the first time period for the terminal by using configuration information.

In some embodiments, determining, by the network device, the start position of the first time period based on the given rule, may specifically be: determining the start position of the first time period as an end position of the validity time period of the location information.

In some embodiments, determining, by the network device, the start position of the first time period based on the given rule may specifically be: determining the start position of the first time period as the position after a first duration after the end position of the validity time period of the location information.

In some embodiments, when the network device determines the duration of the first time period based on the given rule, first, the network device may determine a remaining duration of a timing advance timer, and then, the network device may determine that the duration of the first time period is equal to the remaining duration.

The communication method involved in the embodiments of the present disclosure may include at least one of step S101 to step S102. For example, step S101 may be implemented as an independent embodiment, step S102 may be implemented as an independent embodiment, or step S101 plus step S102 may be implemented as an independent embodiment, which is not limited to this.

In some embodiments, step S101 and step S102 may be performed in an alternate order or simultaneously.

In some embodiments, step S101 is optional. One or more of these steps may be omitted or substituted in different embodiments.

In some embodiments, step S102 is optional. One or more of these steps may be omitted or substituted in different embodiments.

The implementations related to the terminal and the network device in FIG. 1B may be referred to the embodiments described below, and are not repeated here.

In a first aspect, embodiments of the present disclosure provide a communication method. FIG. 2 is a schematic flowchart of a communication method shown according to an embodiment of the present disclosure. The communication method shown in this embodiment may be performed by a terminal, which includes, but is not limited to, a communication apparatus such as a mobile phone, a tablet computer, a wearable device, a sensor, or an IoT device. The terminal may communicate with a network device, which includes, but is not limited to, a network device in a 4G, 5G, or 6G communication system, such as a base station or a core network, etc.

As shown in FIG. 2, the communication method may include the following step.

In step S201, it is determined that a validity time period of location information expires, and an uplink transmission is performed based on a scheduling command.

According to the embodiments of the present disclosure, after determining that the validity time period of the location information expires, the terminal may not enter the idle state or the inactive state, but may remain in the connected state, so that the terminal may continue to perform the uplink transmission based on the scheduling command of the network device, which helps to avoid delay in the uplink transmission.

For example, when the validity time period of the location information does not expire, the terminal may determine a TA based on the location information and perform pre-compensation for the uplink synchronization based on the TA, thus enabling to perform the uplink transmission. However, when the validity time period of the location information expires, the terminal may still have partial data (e.g., data belonging to the same transport block as or a different transport block from data that is already transmitted) that has not been transmitted (e.g., it is determined, based on a scheduling command, not having been transmitted). If the terminal leaves the connected state due to the expiration of the validity time period of the location information in this situation, the terminal needs to re-enter the connected state to transmit the aforementioned partial data. Re-entering the connected state requires performing random access operations, which consumes some time and causes delay in transmission of the aforementioned partial data by the terminal.

According to the embodiments of the present disclosure, when the validity time period of the location information expires, if the terminal determines based on the scheduling command that there is still partial data that has not been transmitted, the terminal may continue to remain in the connected state and send the partial data that has not been transmitted to the network device based on the scheduling command, without having to leave the connected state and then re-enter the connected state, which helps to avoid delay in the uplink transmission.

In some embodiments, the transmission execution method further includes: determining partial or all timing advances (TA) based on the location information of the terminal that is most recently determined; and performing pre-compensation for the uplink synchronization based on the timing advances.

In some embodiments, the communication method further includes: determining a timing advance based on a timing drift on a service link; and performing pre-compensation for the uplink synchronization based on the timing advance.

In order to perform the uplink transmission based on the scheduling command, the terminal still needs to determine the TA and perform pre-compensation for the uplink synchronization based on the determined timing advance, and then the terminal may perform the uplink transmission based on the scheduling command.

For example, in a case of determining that the validity time period of the location information expires, the terminal may determine the TA based on the location information of the terminal that is most recently determined (or last determined). Although there is a certain shortcoming in accuracy to determine the TA based on the location information of the terminal that is most recently determined when the validity time period of the location information expires, the current TA may still be represented to a certain extent. Therefore, pre-compensation for the uplink synchronization may be performed based on the determined TA.

For example, in a case of determining that the validity time period of the location information expires, the terminal may determine the TA based on the timing drift on the service link (e.g., indicated by the network device), and then may perform pre-compensation for the uplink synchronization based on the determined TA. Among them, the timing drift characterizes how the TA changes over time. For instance, if the most recently determined TA is TA1, and the timing drift is k, the currently determined TA is TA2 = TA1+k.

In some embodiments, the validity time period of location information includes the valid duration of the location information. The location information is valid within the validity time period, and the validity time period may last for a period of time. Therefore, the validity time period may also be referred to as the valid duration. The valid duration may be configured by the network device, given, or determined autonomously by the terminal.

In some embodiments, the location information is obtained based on a global navigation satellite system (GNSS). In this case, the validity time period of the location information may be referred to as the GNSS validity duration.

It should be noted that obtaining the location information based on GNSS is only one embodiment of determining the location information in the present disclosure. The location information may also be obtained in other ways, and the specific obtaining manner is not limited in the present disclosure.

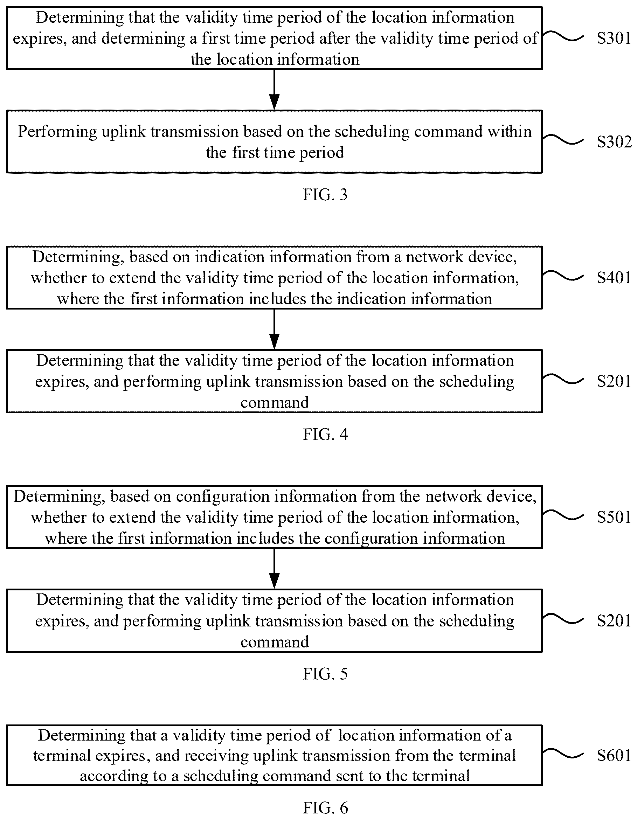

FIG. 3 is a schematic flowchart of another communication method shown according to an embodiment of the present disclosure. The method shown in this embodiment may be performed by a terminal. As shown in FIG. 3, performing the uplink transmission based on the scheduling command includes the following steps.

In step S301, a first time period is determined after the validity time period of the location information.

In step S302, the uplink transmission is performed based on the scheduling command within the first time period.

It should be noted that the embodiment shown in FIG. 3 may be implemented independently or in combination with at least one other embodiment in the present disclosure. The specific implementation is not limit in the present disclosure.

In some embodiments, the terminal may determine a first time period after the validity time period of the location information, and then perform the uplink transmission based on the scheduling command within the first time period.

In some embodiments, the communication method further includes: after a first time period, controlling the terminal to enter a non-connected state. In this way, it may avoid that the terminal occupies the network resources due to remaining in a connected state for a long time thus. Among them, the non-connected state includes at least one of an idle state or an inactive state.

It should be noted that within the first time period after the validity time period, the validity time period of the location information has expired. If the TA is determined still based on the location information of the terminal determined within the validity time period (such as the location information of the terminal that is most recently determined), there is a certain shortcoming in the accuracy of the TA. However, compared to the problem caused by the terminal being unable to perform the uplink transmission due to the expiration of the validity time period, the problem of insufficient TA accuracy is relatively minor. Therefore, the terminal may continue to perform the uplink transmission within the first time period.

In some embodiments, the terminal may determine the service type of the uplink transmission. Only when the service type of the uplink transmission belongs to the first type, the terminal may continue to perform the uplink transmission based on the scheduling command after the validity time period of the location information expires. When the service type of the uplink transmission does not belong to the first type, the terminal may enter a non-connected state after the validity time period of the location information expires.

In some embodiments, the first type includes, but is not limited to, the URLLC (Ultra-reliable and ultra-low latency communications) service.

The following examples illustrate the first time period after the validity time period of location information.

In some embodiments, the first time period includes at least one of the following:
an extended time period of the validity time period of the location information; or
a given time period.

For example, the first time period may be an extended time period of the validity time period of the location information. That is, the first time period still belongs to the validity time period of the location information. When the validity time period of the location information expires, the terminal may still remain in the connected state. However, the extended validity time period of the location information is longer than the original validity time period of the location information. Specifically, the extended validity time period of the location information may be longer than the original validity time period of the location information by the first time period. Thus, after the original validity time period of the location information expires, the terminal may continue to remain in the connected state within the extended first time period and perform the uplink transmission based on the scheduling command.

For example, the first time period may be a given time period, such as a newly defined time period that is different from the validity time period of the location information. Then, when the validity time period of the location information expires, the terminal may continue to remain in the connected state within the given time period after the validity time period and perform the uplink transmission based on the scheduling command.

It should be noted that in a case that the first time period includes an extended time period, the validity time period before extension (that is, the validity time period described in the embodiment of FIG. 2, which may be referred to as the original validity time period of the location information) plus the extended time period may still be referred to as the validity time period of the location information, which may be referred to as the extended validity time period of the location information. The extended validity time period of the location information is longer than the validity time period of the location information before extension.

In a case that the first time period includes a given time period, the validity time period of the location information remains unchanged. However, a new time period is defined as the given time period after the validity time period of the location information.

In some embodiments, the communication method further includes: determining, based on first information from the network device, whether to extend the validity time period of the location information.

The terminal may receive the first information from the network device and determine whether to extend the validity time period of the location information based on the first information. If it is determined to extend the validity time period of the location information, the terminal may remain in the connected state within the extended first period after the validity time period of the location information expires, and perform the uplink transmission based on the scheduling command. If it is determined not to extend the validity time period of the location information, the terminal may leave the connected state when the validity time period of the location information expires.

In this case, whether to extend the validity time period of location information may be controlled by the network device, which helps improve the control capability of the network device over the communication operation of the terminal.

FIG. 4 is a schematic flowchart of another communication method shown according to an embodiment of the present disclosure. The method shown in this embodiment may be performed by a terminal. As shown in FIG. 4, determining, based on the first information from the network device, whether to extend the validity time period of location information includes the following steps.

In step S401, it is determined, based on indication information from the network device, whether to extend the validity time period of the location information, where the first information includes the indication information.

It should be noted that the embodiment shown in FIG. 4 may be implemented independently or in combination with at least one other embodiment in the present disclosure. The specific implementation is not limit in the present disclosure.

The network device sends the first information to the terminal to indicate the terminal to determine whether to extend the validity time period of the location information. This may be done in an explicit manner. In this case, the first information may be the indication information.

In some embodiments, determining, based on the indication information from the network device, whether to extend the validity time period of location information includes: in response to a value of the indication information being a first value, determining to extend the validity time period of the location information; and in response to the value of the indication information being a second value, determining not to extend the validity time period of the location information.

For example, the indication information may occupy 1 bit. When the indication information is 1, the indication information may indicate the terminal to extend the validity time period of the location information. When the indication information is 0, the indication information may indicate the terminal not to extend the validity time period of the location information.

It should be noted that the indication information occupying 1 bit is just an example of the indication information. The specific number of bits occupied by the indication information may be determined by the network device as needed, which is not limited in the present disclosure.

FIG. 5 is a schematic flowchart of another communication method shown according to an embodiment of the present disclosure. The method shown in this embodiment may be performed by a terminal. As shown in FIG. 5, determining, based on the first information from the network device, whether to extend the validity time period of location information includes the following steps.

In step S501, it is determined, based on configuration information from the network device, whether to extend the validity time period of the location information, where the first information includes the configuration information.

It should be noted that the embodiment shown in FIG. 5 may be implemented independently or in combination with at least one other embodiment in the present disclosure. The specific implementation is not limit in the present disclosure.

The network device sends the first information to the terminal to indicate the terminal to determine whether to extend the validity time period of the location information. This may be done in an implicit manner. In this case, the first information may be the configuration information.

In some embodiments, determining, based on the configuration information from the network device, whether to extend the validity time period of the location information includes: in response to the configuration information including information about the extended time period, determining to extend the validity time period of the location information; in response to the configuration information not including the information about the extended time period, determining not to extend the validity time period of the location information.

For example, the terminal may receive the configuration information sent by the network device. The configuration information is at least used to configure the extended time period. When the configuration information contains information about the extended time period (such as the start position and the duration of the extended time period), the terminal may determine to extend the validity time period of the location information and determine the extended time period based on the configuration information. When the configuration information does not contain information about the extended time period, the terminal may determine not to extend the validity time period of the location information.

In some embodiments, the communication method further includes at least one of the following:
determining a start position of the first time period based on a given rule;
determining a duration of the first time period based on the given rule;
determining the start position of the first time period based on the configuration information; or
determining the duration of the first time period based on the configuration information.

The terminal may determine the first time period based on the start position of the first time period and the duration of the first time period. Among them, the start position may be determined based on a given rule or the configuration information sent by the network device; and the duration may be determined based on the given rule or the configuration information sent by the network device.

In some embodiments, determining the start position of the first time period based on the given rule includes at least one of the following:
determining the start position of the first time period as an end position of the validity time period of the location information; or
determining the start position of the first time period as a position after a first duration after the end position of the validity time period of the location information.

For example, the given rule may specify that the start position of the first time period is the end position of the validity time period of the location information. The terminal may use the end position of the validity time period of the location information as the start position of the first time period, and then determine the first duration based on the duration of the first duration.

For example, the given rule may specify that the start position of the first time period is the position of the first duration after the end position of the validity time period of the location information. The terminal may determine, after the end position of the validity time period of the location information, the position of the first duration to the end position, and use the determined position as the start position of the first duration. Then, the terminal may determine the first duration based on the duration of the first duration.

In some embodiments, determining the duration of the first time period based on the given rules include: determining a remaining duration of a timing advance timer (TAT); and determining that the duration of the first time period is equal to the remaining duration.

For example, the given rule may specify that the duration of the first time period is equal to the remaining duration of the TAT. The terminal may determine the remaining duration of the TAT and determine that the duration of the first time period is equal to the remaining duration of the TAT. Then, the terminal may determine the first duration based on the start position of the first duration.

In a second aspect, embodiments of the present disclosure provide a communication method. FIG. 6 is a schematic flowchart of a communication method according to an embodiment of the present disclosure. The communication method shown in this embodiment may be performed by a network device, which may communicate with a terminal. The network device includes, but is not limited to, a base station in a communication system such as a 4G base station, a 5G base station, and a 6G base station. The terminal includes, but is not limited to, a communication apparatus such as a mobile phone, a tablet computer, a wearable device, a sensor, and an IoT device.

As show in FIG. 6, the communication method may include the following step.

In step S601, it is determined that the validity time period of the location information of the terminal expires, and uplink transmission from the terminal is received based on the scheduling command sent to the terminal.

According to the embodiments of the present disclosure, after the network device determines that the validity time period of the location information expires, the network device may determine that the terminal does not enter the idle state or the inactive state, but continues to remain in the connected state, so that the network device may continue to perform receiving the uplink transmission from the terminal based on the scheduling command sent to the terminal, which helps to avoid the delay in the uplink transmission of the terminal.

For example, when the validity time period of the location information does not expire, the terminal may determine a TA based on the location information and perform pre-compensation for the uplink synchronization based on the TA, thus enabling to perform the uplink transmission. However, when the validity time period of the location information expires, the terminal may still have partial data (e.g., data belonging to the same transport block as or a different transport block from data that is already transmitted) that has not been transmitted (e.g., it is determined, based on a scheduling command, not having been transmitted). If the terminal leaves the connected state due to the expiration of the validity time period of the location information in this situation, the terminal needs to re-enter the connected state to transmit the aforementioned partial data. Re-entering the connected state requires performing random access operations, which consumes some time and causes delay in transmission of the aforementioned partial data by the terminal.

According to the embodiments of the present disclosure, when the validity time period of the location information of the terminal expires, if the network device determines, based on the scheduling command sent to the terminal, that the terminal still has partial data that has not been transmitted, the network device may determine that the terminal continues to remain in the connected state, and may receive, based on the scheduling command sent to the terminal, the partial data sent by the terminal that has not been transmitted, without having to wait for the terminal to leave the connected state and then re-enter the connected state to receive the partial data that has not been transmitted, which helps to avoid delay in the uplink transmission.

In some embodiments, the validity time period of the location information includes the valid duration of the location information. The location information is valid within the validity time period, and the validity time period may last for a period of time. Therefore, the validity time period may also be referred to as the valid duration. The valid duration may be configured by the network device, given, or determined autonomously by the terminal.

In some embodiments, the location information is obtained by the terminal based on a global navigation satellite system. In this case, the validity time period of the location information may be referred to as the GNSS validity duration.

It should be noted that obtaining the location information based on GNSS is only one embodiment of determining the location information in the present disclosure. The location information may also be obtained in other ways, and the specific obtaining manner is not limited in the present disclosure.

In some embodiments, receiving the uplink transmission from the terminal based on the scheduling command sent to the terminal includes: determining a first time period after the validity time period of the location information; and receiving the uplink transmission from the terminal based on the scheduling command within the first time period.

After the validity time period of the location information, the network device may determine the first time period, and then receive the uplink transmission from the terminal based on the scheduling command within the first time period.

It should be noted that within the first time period after the validity time period, the validity time period of the location information has expired. If the TA is determined still based on the location information of the terminal determined within the validity time period (such as the location information of the terminal that is most recently determined), there is a certain shortcoming in the accuracy of the TA. However, compared to the problem caused by the terminal being unable to perform the uplink transmission due to the expiration of the validity time period, the problem of insufficient TA accuracy is relatively minor. Therefore, the terminal may continue to perform the uplink transmission within the first time period.

In some embodiments, the network device may determine the service type of the uplink transmission. Only when the service type of the uplink transmission belongs to the first type, the network device may continue to receive the uplink transmission from the terminal based on the scheduling command after the validity time period of the location information expires. When the service type of the uplink transmission does not belong to the first type, the network device may determine that the terminal enters a non-connected state after the validity time period of the location information expires.

In some embodiments, the first type includes, but is not limited to, the URLLC service.

In some embodiments, when the network device receives the uplink transmission from the terminal based on the scheduling command within the first time period, the network device may determine the difference between the TA determined by the terminal based on the most recently determined location information of the terminal within the first time period and all or partial TAs determined by the terminal based on actual needs in the first time period. The network device then compensates for this difference so as to ensure that even if there is a problem in the accuracy of the TA determined by the terminal, the pre-compensation effect for uplink synchronization may still be ensured through the compensation of the TA by the network device.

In some embodiments, the first time period includes at least one of the following:
an extended time period of the validity time period of the location information; or
a given time period.

For example, the first time period may be an extended time period of the validity time period of the location information. That is, the first time period still belongs to the validity time period of the location information. When the validity time period of the location information expires, the network device may determine that terminal remains in the connected state. However, the extended validity time period of the location information is longer than the original validity time period of the location information. Specifically, the extended validity time period of the location information may be longer than the original validity time period of the location information by the first time period. Thus, the network device may determine that, after the original validity time period of the location information, the terminal may continue to remain in the connected state within the extended first time period, and then the network device may receive the uplink transmission from the terminal based on the scheduling command within the first period of time.

For example, the first time period may be a given time period, such as a newly defined time period that is different from the validity time period of the location information. When the validity time period of the location information expires, the network device may determine that the terminal continues to remain in the connected state within the given time period after the validity time period. Then, the network device may receive the uplink transmission from the terminal based on the scheduling command within the first time period.

In some embodiments, the communication method further includes: sending first information to the terminal, where the first information is used to determine whether to extend the validity time period of the location information.

The network device may send first information to the terminal, and indicate, by using the first information, the terminal whether to extend the validity time period of the location information. If the first information indicates to extend the validity time period of the location information, the terminal may continue to remain in the connected state within the extended first period after the validity time period of the location information expires, and perform the uplink transmission based on the scheduling command. If the first information indicates to extend the validity time period of the location information, the terminal may leave the connected state when the validity time period of the location information expires.

In this case, whether to extend the validity time period of location information may be controlled by the network device, which helps improve the control capability of the network device over the communication operation of the terminal.

In some embodiments, the first information includes indication information.

The network device sends first information to the terminal to indicate the terminal to determine whether to extend the validity time period of the location information. This may be done in an explicit manner. In this case, the first information may be the indication information.

In some embodiments, the value of the indication information is a first value, and the indication information is used to determine to extend the validity time period of the location information; and/or, the value of the indication information is a second value, and the indication information is used to determine not to extend the validity time period of the location information.

For example, the indication information may occupy 1 bit. When the indication information is 1, the indication information may indicate the terminal to extend the validity time period of the location information. When the indication information is 0, the indication information may indicate the terminal not to extend the validity time period of the location information.

It should be noted that the indication information occupying 1 bit is just an example of the indication information. The specific number of bits occupied by the indication information may be determined by the network device as needed, which is not limited in the present disclosure.

In some embodiments, the first information includes configuration information.

The network device sends the first information to the terminal to indicate the terminal to determine whether to extend the validity time period of the location information. This may be done in an implicit manner. In this case, the first information may be the configuration information.

In some embodiments, the configuration information includes information about the extended time period, and the configuration information is used to determine to extend the validity time period of the location information; and/or, the configuration information does not include information about the extended time period, and the configuration information is used to determine not to extend the validity time period of the location information.

For example, the network device may send the configuration information to the terminal. The configuration information is at least used to configure the extended time period. When the configuration information contains information about the extended time period (such as the start position and the duration of the extended time period), the terminal may determine to extend the validity time period of the location information and determine the extended time period based on the configuration information. When the configuration information does not contain information about the extended time period, the terminal may determine not to extend the validity time period of the location information.

In some embodiments, the communication method further includes at least one of the following:
determining a start position of the first time period based on a given rule;
determining a duration of the first time period based on the given rule;
determining the start position of the first time period based on the configuration information; or
determining the duration of the first time period based on the configuration information.

The network device may determine the first time period based on the start position of the first time period and the duration of the first time period. Among them, the start position may be determined based on a given rule or the configuration information sent by the network device; and the duration may be determined based on the given rule or the configuration information sent by the network device.

In some embodiments, determining the start position of the first time period based on the given rule includes at least one of the following:
determining the start position of the first time period as an end position of the validity time period of the location information; or
determining the start position of the first time period as a position after a first duration after the end position of the validity time period of the location information.

For example, the given rule may specify that the start position of the first time period is the end position of the validity time period of the location information. The network device may use the end position of the validity time period of the location information as the start position of the first time period, and then determine the first duration based on the duration of the first duration.

For example, the given rule may specify that the start position of the first time period is the position of the first duration after the end position of the validity time period of the location information. The network device may determine, after the end position of the validity time period of the location information, the position of the first duration to the end position, and use the determined position as the start position of the first duration. Then, the network device may determine the first duration based on the duration of the first duration.

In some embodiments, determining the duration of the first time period based on given rule includes: determining a remaining duration of a timing advance timer; and determining that the duration of the first time period is equal to the remaining duration.

For example, the given rule may specify that the duration of the first time period is equal to the remaining duration of the TAT. The network device may determine the remaining duration of the TAT and determine that the duration of the first time period is equal to the remaining duration of the TAT. Then, the network device may determine the first duration based on the start position of the first duration.

In some embodiments, the names of information are not limited to the names described in the embodiments. Terms such as "information", "message", "signal", "signaling", "report", "configuration", "indication", "instruction", "command", "channel", "parameter", "domain", "field", "symbol", "symbol ", "codebook ", "codeword", "codepoint ", "bit", "data", "program", and "chip" may be used interchangeably.

In some embodiments, terms such as "up", "uplink", and "physical uplink" may be used interchangeably. Terms such as "down", "downlink", and "physical downlink" may be used interchangeably. Terms such as "side", "sidelink", "side communication", "sidelink communication", "direct", "direct link", "direct communication", and "direct link communication" may be used interchangeably.

In some embodiments, terms such as "radio", "wireless", "radio access network (RAN)", "access network (AN)", and "RAN-based "may be used interchangeably.

In some embodiments, terms such as "moment", "time point", "time", and "time position" may be used interchangeably. Terms such as "duration", "time period", "time window", "window", and "time" may be used interchangeably.

In some embodiments, terms such as "acquisition", "getting", "obtaining", "receiving", "transmitting", "bidirectional transmission", and "sending and/or receiving" may be used interchangeably, which may be interpreted as a plurality of meanings such as receiving from other entities, obtaining from protocols, obtaining from higher layers, obtaining through self-processing, or autonomous implementation, etc.

In some embodiments, terms such as "sending", "transmitting", "reporting", "issuing", "transmission", "bidirectional transmission", "sending and/or receiving" may be used interchangeably.

Corresponding to the embodiments of the communication methods described above, the present disclosure further provides embodiments of communication apparatuses.

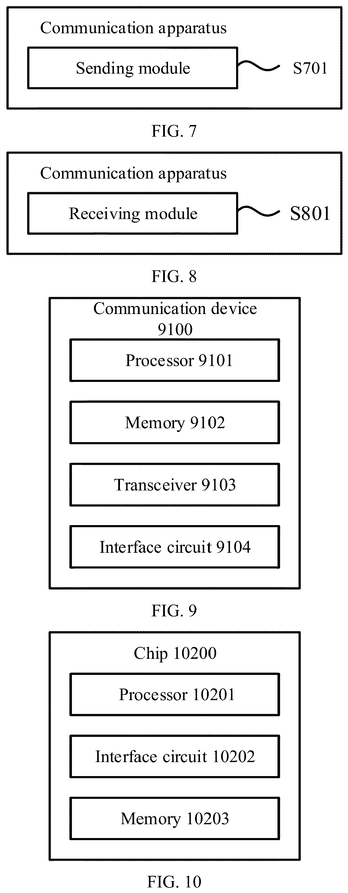

FIG. 7 is a schematic block diagram of a communication apparatus shown according to an embodiment of the present disclosure. As shown in FIG. 7, the communication apparatus includes a sending module 701.

The sending module 701 is configured to determine that a validity time period of location information expires, and perform an uplink transmission based on a scheduling command.

In some embodiments, the validity time period of the location information includes a validity duration of the location information.

In some embodiments, the location information is obtained based on a global navigation satellite system.

In some embodiments, the sending module is configured to: determine a first time period after the validity time period of the location information; and perform the uplink transmission based on the scheduling command within the first time period.

In some embodiments, the first time period includes at least one of: an extended time period of the validity time period of the location information; or, a given time period.

In some embodiments, the apparatus further includes a processing module configured to determine, based on first information from a network device, whether to extend the validity time period of the location information.

In some embodiments, the processing module is configured to determine, based on indication information from the network device, whether to extend the validity time period of the location information, where the first information includes the indication information.

In some embodiments, the processing module is configured to: in response to a value of the indication information being a first value, determine to extend the validity time period of the location information; and in response to the value of the indication information being a second value, determine not to extend the validity time period of the location information.

In some embodiments, the processing module is configured to determine, based on configuration information from the network device, whether to extend the validity time period of the location information, where the first information includes the configuration information.

In some embodiments, the processing module is configured to: in response to the configuration information including information about the extended time period, determine to extend the validity time period of the location information; and in response to the configuration information not including the information about the extended time period, determine not to extend the validity time period of the location information.

In some embodiments, the processing module is further configured to perform at least one of: determining a start position of the first time period based on a given rule; determining a duration of the first time period based on the given rule; determining the start position of the first time period based on configuration information; or determining the duration of the first time period based on the configuration information.

In some embodiments, the processing module is configured to perform at least one of: determining the start position of the first time period as an end position of the validity time period of the location information; or determining the start position of the first time period as a position after a first duration after the end position of the validity time period of the location information.

In some embodiments, the processing module is configured to: determine a remaining duration of a timing advance timer; and determine that the duration of the first time period is equal to the remaining duration.

In some embodiments, the processing module is further configured to: after the first time period, control the terminal to enter a non-connected state.

In some embodiments, the processing module is further configured to: determine partial or all timing advances based on location information of the terminal that is most recently determined; and perform pre-compensation for the uplink synchronization based on the timing advance.

In some embodiments, the processing module is further configured to: determine a timing advance based on a timing drift on a service link; and perform pre-compensation for the uplink synchronization based on the timing advance.

FIG. 8 is a schematic block diagram of a communication apparatus shown according to an embodiment of the present disclosure. As shown in FIG. 8, the communication apparatus includes a receiving module 801.

The receiving module 801 is configured to that a validity time period of location information of a terminal expires, and receive an uplink transmission from the terminal based on a scheduling command sent to the terminal.

In some embodiments, the validity time period of the location information includes a validity duration of the location information.

In some embodiments, the location information is obtained by the terminal based on a global navigation satellite system.

In some embodiments, the receiving module is configured to: determine a first time period after the validity time period of the location information; and receive the uplink transmissions from the terminal based on the scheduling command within the first time period.

In some embodiments, the first time period includes at least one of: an extended time period of the validity time period of the location information; or, a given time period.

In some embodiments, the apparatus further includes a sending module configured to send first information to the terminal, where the first information is used to determine whether to extend the validity time period of the location information.

In some embodiments, the first information includes indication information.

In some embodiments, a value of the indication information is a first value, and the indication information is used to determine to extend the validity time period of the location information; and/or, the value of the indication information is a second value, and the indication information is used to determine not to extend the validity time period of the location information.

In some embodiments, the first information includes configuration information.

In some embodiments, the configuration information includes information about the extended time period, and the configuration information is used to determine to extend the validity time period of the location information; and/or, the configuration information does not include the information on the extended time period, and the configuration information is used to determine not to extend the validity time period of the location information.

In some embodiments, the apparatus further includes a processing module configured to: determine a start position of the first time period based on a given rule; determine a duration of the first time period based on the given rule; configure the start position of the first time period for the terminal by using configuration information; or, configure the duration of the first time period for the terminal by using the configuration information.

In some embodiments, the processing module is configured to: determine the start position of the first time period as an end position of the validity time period of the location information; or, determine the start position of the first time period as a position after a first duration after the end position of the validity time period.

In some embodiments, the processing module is configured to: determine a remaining duration of the timing advance timer; and, determine that the duration of the first time period is equal to the remaining duration.

For the apparatus embodiments, since they basically correspond to the method embodiments, the relevant parts may be referred to the parts of the description of the method embodiments. The apparatus embodiments described above are merely illustrative. Among them, the modules described as separate components may be physically separate or may not be physically separate. The components shown as modules may be physical modules or may not be physical modules. That is, they may be located in one place or distributed on a plurality of network modules. Some or all of the modules may be selected to achieve the purpose of the embodiments based on actual needs. Those skilled in the art may understand and implement this without any creative effort.

Embodiments of the present disclosure further provide a communication device, including: one or more processors, where the processors are configured to invoke commands to cause the communication device to perform the communication method according to any of the above embodiments.

The embodiments of the present disclosure further provide a communication system, and the communication system includes a terminal, a network device, and a core network device, where the terminal is configured to implement the communication method performed by a terminal according to any of the above embodiments, and the network device is configured to implement the communication method performed by a network device according to any of the above embodiments.

Embodiments of the present disclosure further provide a storage medium, with a command stored thereon, where when the command is executed on a communication device, the communication device is caused to perform the communication method performed by a terminal according to any of the above embodiments, and the network device is configured to implement the communication method performed by the network device according to any of the above embodiments.

The present disclosure further provides an apparatus for implementing any of the above methods. For example, an apparatus is provided, and the apparatus includes units or modules for implementing the steps performed by a terminal in any of the above methods. Alternatively, another apparatus is provided, and the apparatus includes units or modules for implementing the steps performed by a network device (e.g., an access network device, a core network functional node, a core network device, etc.) in any of the above methods.

It should be understood that the division of units or modules in the above apparatus is only a logical functional division. In actual implementation, they may be fully or partially integrated into a single physical entity, or they may be physically separated. Furthermore, the units or modules in the apparatus may be implemented by a processor invoking software. For example, the apparatus includes a processor connected to a memory, and the memory stores with a command. The processor invokes the command stored in the memory to implement any of the above methods or to implement the functions of the units or modules in the above apparatus. Among them, the processor may be, for example, a general-purpose processor, such as a Central Processing Unit (CPU) or a microprocessor, and the memory may be a memory inside the apparatus or a memory outside the apparatus. Alternatively, the units or modules in the apparatus may be implemented in the form of hardware circuits. The functions of some or all of the units or modules may be achieved through the design of these hardware circuits, which may be understood as one or more processors. For example, in an implementation, the hardware circuit is an application-specific integrated circuit (ASIC), and the functions of some or all of the units or modules is achieved through the design of the logical relationships between the components within the circuit. For another example, in another implementation, the hardware circuit may be implemented using a programmable logic device (PLD), such as a field-programmable gate array (FPGA), which may include a large number of logic gate circuits. The connection relationships between the logic gate circuits are configured through configuration files, thus achieving the functions of some or all of the units or modules. All units or modules of the above apparatus may be implemented entirely through invoking software by a processor, or entirely through hardware circuits, or partially through invoking software by a processor with the remaining parts implemented through hardware circuits.

In the embodiments of the present disclosure, the processor is a circuit with signal processing capabilities. In an implementation, the processor may be a circuit with command reading and executing capabilities, such as a Central Processing Unit (CPU), a microprocessor, a graphics processing unit (GPU) (which may be understood as a microprocessor), or a digital signal processor (DSP). In another implementation, the processor can implement certain functions through the logical relationships of hardware circuits. The logical relationships of the aforementioned hardware circuits are fixed or reconfigurable. For example, the processor is a hardware circuit implemented using an application-specific integrated circuit (ASIC) or a programmable logic device (PLD), such as an FPGA. In a reconfigurable hardware circuit, the process that the processor loads a configuration document to implement configuration of the hardware circuit may be understood as the process that the processor loads commands to implement the functions of some or all of the above units or modules. Furthermore, it may also be a hardware circuit designed for artificial intelligence, which may be understood as an ASIC, such as a Neural Network Processing Unit (NPU), a Tensor Processing Unit (TPU), or a Deep Learning Processing Unit (DPU).

FIG. 9 is a schematic diagram of the structure of the communication device 9100 provided according to an embodiment of the present disclosure. The communication device 9100 may be a network device (e.g., an access network device, a core network device, etc.). Alternatively, the communication device 9100 may be a terminal (e.g., user equipment, etc.). Alternatively, the communication device 9100 may be a chip, a chip system, or a processor that supports the network device in implementing any of the above methods. Alternatively, the communication device 9100 may be a chip, a chip system, or a processor that supports the terminal in implementing any of the above methods. The communication device 9100 may be used to implement the methods described in the above method embodiments; for details, reference may be made to the descriptions in the above method embodiments.

As shown in FIG. 9, the communication device 9100 includes one or more processors 9101. The processor 9101 may be a general-purpose processor or a dedicated processor, such as a baseband processor or a central processing unit. The baseband processor may be used to process communication protocols and communication data. The central processing unit may be used to control communication apparatuses (e.g., base stations, baseband chips, terminal devices, terminal device chips, DUs or CUs, etc.), execute programs, and process program data. The processor 9101 is used to invoke commands to cause the communication device 9100 to perform any of the above methods.

In some embodiments, the communication device 9100 further includes one or more memories 9102 for storing commands. Optionally, all or part of the memories 9102 may also be located outside the communication device 9100.

In some embodiments, the communication device 9100 further includes one or more transceivers 9103. When the communication device 9100 includes one or more transceivers 9103, the communication steps such as sending and receiving in the above methods are performed by the transceivers 9103, and other steps are performed by the processor 9101.

In some embodiments, a transceiver may include a receiver and a transmitter, which may be separate or integrated. Optionally, the terms such as transceiver, transceiver unit, transceiver machine, transceiver circuit, etc., may be used interchangeably. The terms transmitter, transmitting unit, transmitting machine, transmitting circuit, etc., may be used interchangeably. The terms such as receiver, receiving unit, receiving machine, receiving circuit, etc., may be used interchangeably.

Optionally, the communication device 9100 further includes one or more interface circuits 9104, which are connected to the memory 9102. The interface circuit 9104 may be used to receive signals from the memory 9102 or other apparatuses, and may be used to send signals to the memory 9102 or other apparatuses. For example, the interface circuits 9104 may read commands stored in the memory 9102 and send the commands to the processor 9101.

The communication device 9100 described in the above embodiments may be a network device or a terminal, but the scope of the communication device 9100 described in the present disclosure is not limited to this. The structure of the communication device 9100 may not be limited by FIG. 9. The communication device may be an independent device or may be part of a larger device. For example, the communication device may be: (1) an independent integrated circuit IC, or a chip, or a chip system or subsystem; (2) a set of one or more ICs, optionally, the set of ICs may also include storage components for storing data and programs; (3) an ASIC, such as a modem; (4) a module that may be embedded in other devices; (5) a receiver, a terminal device, a smart terminal device, a cellular phone, a wireless device, a handheld device, a mobile unit, a vehicle-mounted device, a network device, a cloud device, an artificial intelligence device, etc.; (6) others, etc.

FIG. 10 is a schematic diagram of the structure of a chip 10200 provided according to an embodiment of the present disclosure. For cases where the communication device 9100 may be a chip or a chip system, reference may be made to the schematic diagram of the structure of the chip 10200 shown in FIG. 10, but it is not limited to this.

The chip 10200 includes one or more processors 10201, which are used to invoke commands to cause the chip 10200 to perform any of the above methods.

In some embodiments, the chip 10200 further includes one or more interface circuits 10202, which are connected to the memory 10203. The interface circuit 10202 may be used to receive signals from the memory 10203 or other apparatuses. The interface circuit 10202 may be used to send signals to the memory

10203 or other apparatuses. For example, the interface circuit 10202 may read commands stored in memory 10203 and send those commands to the processor 10201. Optionally, terms such as interface circuit, interface, transceiver pin, transceiver, etc., may be used interchangeably.

In some embodiments, the chip 10200 further includes one or more memories 10203 for storing commands. Optionally, all or part of the memories 10203 may be located outside of the chip 10200.

The present disclosure further provided a storage medium, and the storage medium stores with commands. When the commands are executed on the communication device 9100, the communication device 9100 is caused to perform any of the above methods. Optionally, the storage medium is an electronic storage medium. Optionally, the storage medium is a computer-readable storage medium, but not limited to this; it may also be a storage medium readable by other apparatuses. Optionally, the storage medium may be a non-transitory storage medium, but not limited to this; it may also be a temporary storage medium.

The present disclosure further provides a program product. When the program product is executed by the communication device 9100, the communication device 9100 is caused to perform any of the above methods. Optionally, the program product is a computer program product.

The present disclosure further provides a computer program. When the computer program runs on a computer, the computer is caused to perform any of the above methods.

## Claims

1. A communication method, wherein the method is performed by a terminal, and the method comprises:
determining that a validity time period of location information expires, and performing an uplink transmission based on a scheduling command.

2. The method according to claim 1, wherein the validity time period of the location information comprises a validity duration of the location information.

3. The method according to claim 2, wherein the location information is obtained based on a global navigation satellite system.

4. The method according to any one of claims 1 to 3, wherein performing the uplink transmission based on the scheduling command comprises:
determining a first time period after the validity time period of the location information; and
performing the uplink transmission based on the scheduling command within the first time period.

5. The method according to claim 4, wherein the first time period comprises at least one of:
an extended time period of the validity time period of the location information; or
a given time period.

6. The method according to claim 5, wherein the method further comprises:
determining, based on first information from a network device, whether to extend the validity time period of the location information.

7. The method according to claim 6, wherein determining, based on the first information from the network device, whether to extend the validity time period of the location information comprises:
determining, based on indication information from the network device, whether to extend the validity time period of the location information, wherein the first information comprises the indication information.

8. The method according to claim 7, wherein determining, based on the indication information from the network device, whether to extend the validity time period of the location information comprises:
a value of the indication information being a first value, determining to extend the validity time period of the location information; or
a value of the indication information being a second value, determining not to extend the validity time period of the location information.

9. The method according to claim 6, wherein determining, based on the first information from the network device, whether to extend the validity time period of the location information comprises:
determining, based on configuration information from the network device, whether to extend the validity time period of the location information, wherein the first information comprises the configuration information.

10. The method according to claim 6, wherein determining, based on the configuration information from the network device, whether to extend the validity time period of the location information comprises:
the configuration information comprising information about the extended time period, determining to extend the validity time period of the location information; or
the configuration information not comprising information about the extended time period, determining not to extend the validity time period of the location information.

11. The method according to any one of claims 4 to 10, wherein the method further comprises at least one of:
determining a start position of the first time period based on a given rule;
determining a duration of the first time period based on a given rule;
determining a start position of the first time period based on configuration information; or
determining a duration of the first time period based on configuration information.

12. The method according to claim 11, wherein determining the start position of the first time period based on the given rule comprises at least one of:
determining the start position of the first time period as an end position of the validity time period of the location information; or
determining the start position of the first time period as a position after a first duration after the end position of the validity time period of the location information.

13. The method according to claim 11, wherein determining the duration of the first time period based on the given rule comprises:
determining a remaining duration of a timing advance timer; and
determining that the duration of the first time period is equal to the remaining duration.

14. The method according to any one of claims 4 to 13, wherein the method further comprises:
controlling the terminal to enter a non-connected state after the first time period.

15. The method according to any one of claims 1 to 14, wherein the method further comprises:
determining partial or all timing advances based on location information of the terminal that is most recently determined; and
performing pre-compensation for the uplink synchronization based on the timing advances.

16. The method according to any one of claims 1 to 14, wherein the method further comprises:
determining a timing advance based on a timing drift on a service link; and
performing pre-compensation for the uplink synchronization based on the timing advance.

17. A communication method, wherein the method is performed by a network device, and the method comprises:
determining that a validity time period of location information of a terminal expires, and receiving an uplink transmission from the terminal based on a scheduling command sent to the terminal.

18. The method according to claim 17, wherein the validity time period of the location information comprises a validity duration of the location information.

19. The method according to claim 18, wherein the location information is obtained by the terminal based on a global navigation satellite system.

20. The method according to any one of claims 17 to 19, wherein receiving the uplink transmission from the terminal based on the scheduling command sent to the terminal comprises:
determining a first time period after the validity time period of the location information; and
receiving the uplink transmission from the terminal based on the scheduling command within the first time period.

21. The method according to claim 20, wherein the first time period comprises at least one of:
an extended time period of the validity time period of the location information; or
a given time period.

22. The method according to claim 21, wherein the method further comprises:
sending first information to the terminal, wherein the first information is used to determine whether to extend the validity time period of the location information.

23. The method according to claim 22, wherein the first information comprises indication information.

24. The method according to claim 7, wherein a value of the indication information is a first value, and the indication information is used to determine to extend the validity time period of the location information; and/or
a value of the indication information is a second value, and the indication information is used to determine not to extend the validity time period of the location information.

25. The method according to claim 22, wherein the first information comprises configuration information.

26. The method according to claim 22, wherein the configuration information comprises information about the extended time period, and the configuration information is used to determine to extend the validity time period of the location information; and/or
the configuration information does not comprise information about the extended time period, and the configuration information is used to determine not to extend the validity time period of the location information.

27. The method according to any one of claims 20 to 26, wherein the method further comprises at least one of:
determining a start position of the first time period based on a given rule;
determining a duration of the first time period based on a given rule;
configuring a start position of the first time period for the terminal by using configuration information; or
configuring a duration of the first time period for the terminal by using configuration information.

28. The method according to claim 27, wherein determining the start position of the first time period based on the given rule comprises at least one of:
determining the start position of the first time period as an end position of the validity time period of the location information; or
determining the start position of the first time period as a position after a first duration after the end position of the validity time period.

29. The method according to claim 27, wherein determining the duration of the first time period based on the given rule comprises:
determining a remaining duration of a timing advance timer; and
determining that the duration of the first time period is equal to the remaining duration.

30. A communication apparatus, wherein the apparatus comprises:
a sending module, configured to determine that a validity time period of location information expires, and perform an uplink transmission based on a scheduling command.

31. A communication apparatus, wherein the apparatus comprises:
a receiving module, configured to determine that a validity time period of location information of a terminal expires, and receive an uplink transmission from the terminal based on a scheduling command sent to the terminal.

32. A communication device, wherein the communication device comprises:
one or more processors;
wherein the processors are configured to invoke commands to cause the communication device to perform the communication method according to any one of claims 1 to 16 and 17 to 29.

33. A communication system, wherein the system comprises a terminal, a network device, and a core network device, wherein the terminal is configured to implement the communication method according to any one of claims 1 to 16, and the network device is configured to implement the communication method according to any one of claims 17 to 29.

34. A storage medium with a command stored thereon, wherein when the command is executed on a communication device, the communication device is caused to perform the communication method according to any one of claims 1 to 16, and the network device is configured to implement the communication method according to any one of claims 17 to 29.
